# EUROPEAN PATENT APPLICATION

(11) **EP 4 694 227 A1**
(43) Date of publication of application: **11.02.2026**
(21) Application number: 24783974.9
(22) Date of filing: 06.02.2024
(51) Int. Cl.: H04W 4/60

(54) **SIM CARD INFORMATION LOADING METHOD AND APPARATUS, STORAGE MEDIUM, AND ELECTRONIC DEVICE**

(30) Priority: 04.04.2023 CN 202310389705
(71) Applicant: TCL Mobile Communication Technology (Ningbo) Co., Ltd., Ningbo, Zhejiang 315042 (CN)
(72) Inventor: ZHONG, Zhibin, Ningbo, Zhejiang 315042 (CN); GONG, Yangzhong, Ningbo, Zhejiang 315042 (CN)
(74) Representative: Herrero & Asociados, S.L.
(86) International application number: PCT/CN2024/076313
(87) International publication number: WO 2024/207889

(57) **Abstract**

The present disclosure relates to the technical field of communications, and discloses an SIM card information loading method and apparatus, a storage medium, and an electronic device. A system user interface application may: obtain an object instance of a plug-in application by using a class loader and a reflection mechanism; send configuration information of a project to the plug-in application; and receive SIM card information loaded and transmitted by the plug-in application from an operator specific module corresponding to the project according to the configuration information. The present disclosure can improve the performance of loading SIM card information.

## Description

This application claims the priority of Chinese Patent Application No. 202310389705.6, entitled "SIM CARD INFORMATION LOADING METHOD AND APPARATUS, STORAGE MEDIUM, AND ELECTRONIC DEVICE", filed on April 4, 2023, the disclosure of which is incorporated herein by reference in its entirety.

### FIELD OF THE DISCLOSURE

The present disclosure relates to a field of communication technologies, and more particularly to a method, device, storage medium, and electronic device for loading user identification card information.

### BACKGROUND

User identification card (SIM card) information is an indispensable type of communication information for smart communication devices. It includes the SIM card signal icon, network type, mobile data status, roaming status, operator name, and other information, which are mainly displayed in the system-level System User Interface (SystemUI) application.

Since there are numerous operators worldwide, the SIM card display information of different operators varies greatly. Traditional designs are based on adapting Google's open-source SystemUI, which leads to the following problems: Each version of the Google system requires redeveloping the adaptation from scratch, resulting in a large workload; when operator differences are significant, the code logic becomes highly complex, making design difficult and complicated; the tight coupling with the SystemUI application is unfavorable for functional module management, which also leads to a significant increase in the number of development bugs; each operator project uses its own set of code, resulting in low reuse of common code resources, and poor code scalability and customizability.

### Technical problem

At present, existing methods for loading user identification card information suffer from poor loading performance due to the above-mentioned problems.

### Technical Solution

The embodiments of the present disclosure provide a solution that can effectively improve the loading performance of user identification card information.

The embodiments of the present disclosure provide the following technical solution:
According to an embodiment of the present disclosure, a method of loading user identification card information applied to a system user interface application is provided. The method includes: scanning a plugin application of a user identification card, and obtaining an object instance of the plugin application by using a class loader and a reflection mechanism, where the plugin application comprises a plurality of operator customized modules that are decoupled from each other; establishing communication with the plugin application based on the object instance, and sending configuration information of a project to the plugin application; receiving user identification card information transmitted by the plugin application, where the user identification card information is loaded and transmitted by the plugin application from an operator customized module corresponding to the project according to the configuration information.

In some embodiments of the present disclosure, before scanning the plugin application of the user identification card, the method further comprises: monitoring a system broadcast to obtain a system broadcast; and detecting a scanning action to trigger scanning of the plugin application according to the system broadcast.

In some embodiments of the present disclosure, after receiving the user identification card information transmitted by the plugin application, the method further comprises: determining a display policy of the user identification card information; performing a display operation on the user identification card information according to the display policy.

In some embodiments of the present disclosure, before scanning the plugin application of the user identification card, the method further comprises:
detecting whether the plugin application is installed locally to obtain a detection result; determining whether to scan the plugin application according to the detection result.

In some embodiments of the present disclosure, before receiving the user identification card information transmitted by the plugin application, the method further comprises: acquiring processing information of the user identification card information; and sending the processing information to the plugin application, where the processing information is used by the plugin application to perform preprocessing on the user identification card information.

In some embodiments of the present disclosure, before scanning the plugin application of the user identification card, the method further comprises: monitoring a user operation to obtain a monitored user operation; and detecting a scanning action according to the user operation, where the scanning action is used to trigger scanning of the plugin application.

In some embodiments of the present disclosure, after establishing communication with the plugin application based on the object instance, the method further comprises sending verification information to the plugin application, where the verification information is used by the plugin application to perform verification processing on the user identification card information.

In some embodiments of the present disclosure, after receiving the user identification card information transmitted by the plugin application, the method further comprises performing a display operation on the user identification card information according to a predetermined unified display policy.

In some embodiments of the present disclosure, the receiving the user identification card information transmitted by the plugin application comprises receiving the user identification card information obtained after the plugin application performs preprocessing according to the processing information.

According to another embodiment of the present disclosure, a user identification card information loading device applied to a system user interface application is provided. The user identification card information loading device includes: a preprocessing module, configured to scan a plug-in application for a user identification card, and obtain an object instance of the plug-in application using a class loader and reflection mechanism, where the plug-in application comprises a plurality of operator customization modules that are decoupled from each other; a transmission module, configured to establish communication with the plug-in application based on the object instance, and transmit configuration information of a project to the plug-in application; and a reception module, configured to receive the user identification card information transmitted by the plug-in application, where the user identification card information is loaded and transmitted by the plug-in application from the operator customization module corresponding to the project based on the configuration information.

In some embodiments of the present disclosure, the device further includes a broadcast trigger module configured to, prior to scanning the plug-in application for the user identification card, monitor system broadcasts to obtain a received system broadcast, and detect a scanning action based on the system broadcast, where the scanning action is used to trigger the scanning of the plug-in application.

In some embodiments of the present disclosure, the device further includes a display module configured to, after receiving the user identification card information transmitted by the plug-in application, determine a display strategy for the user identification card information, and perform a display operation on the user identification card information according to the display strategy.

In some embodiments of the present disclosure, the device further includes a detection module configured to, prior to scanning the plug-in application for the user identification card, detect whether the plug-in application is locally installed, to obtain a detection result, and determine whether to perform scanning on the plug-in application based on the detection result.

In some embodiments of the present disclosure, the device further includes a request module configured to, prior to receiving the user identification card information transmitted by the plug-in application, obtain processing information of the user identification card information, and transmit the processing information to the plug-in application, where the processing information is used for the plug-in application to perform preprocessing on the user identification card information.

In some embodiments of the present disclosure, the device further includes an operation trigger module configured to, prior to scanning the plug-in application for the user identification card, monitor user operations to obtain a detected user operation, and detect a scanning action based on the user operation, where the scanning action is used to trigger the scanning of the plug-in application.

In some embodiments of the present disclosure, the device further includes a verification module configured to transmit verification information to the plug-in application after establishing communication with the plug-in application based on the object instance, where the verification information is used by the plug-in application to perform verification processing on the user identification card information.

According to another embodiment of the present disclosure, a storage medium stores computer program thereon. When the computer program is executed by a processor of a computer, the computer executes the method described in the embodiment of the present disclosure.

According to another embodiment of the present disclosure, an electronic device includes a memory storing computer program, and a processor executing the computer program to perform the method described in the embodiment of the present disclosure.

According to another embodiment of the present disclosure, a computer program product or a computer program includes a computer instruction stored in a computer-readable storage medium. A processor of a computer device reads the computer instruction from the computer-readable storage medium to perform the method provided in various optional implementations described in the embodiments of the present disclosure.

### Advantageous effects

In the embodiments of the present disclosure, the system user interface application may: scan a plug-in application of a user identification card, and obtain an object instance of the plug-in application by using a class loader and a reflection mechanism, where the plug-in application comprises a plurality of operator customization modules that are decoupled from each other; establish communication with the plug-in application based on the object instance and send project configuration information to the plug-in application; and receive user identification card information transmitted by the plug-in application, where the user identification card information is loaded and transmitted by the plug-in application from the operator customization module corresponding to the project according to the configuration information.

In this manner, by using the plug-in application of the user identification card, the SIM card functional modules are separated from the system user interface application (SystemUI application), thereby avoiding various problems caused by coupling the SIM card functional modules into the SystemUI application. The independent implementation of the SIM card plug-in application shares the ROM usage of SIM card-related customization resources, avoiding the problem of excessive ROM size of the SystemUI caused by overly large operator-specific customization resources. Furthermore, the plug-in application implements multiple operator customization modules that are mutually decoupled, realizing functional modularization, which facilitates version iteration development with less workload, and provides high reuse rate, as well as high scalability and customizability. Operator customizations are isolated from one another, and separate customization enables dynamic loading of user identification card information customized for different operators. Accordingly, the overall loading performance of user identification card information can be effectively improved.

### BRIEF DESCRIPTION OF THE DRAWINGS

In order to more clearly illustrate the technical solutions in the embodiments of the present disclosure, the drawings required to be used in the description of the embodiments will be briefly introduced below, and it is obvious that the drawings described below are only some embodiments of the present disclosure, and for those skilled in the art, other drawings can be acquired according to these drawings without creative labor.
FIG. 1 illustrates a flowchart of a method for loading user identification card information according to an embodiment of the present disclosure.
FIG. 2 illustrates a block diagram of a plug-in application and a system user interface application according to an embodiment of the present disclosure.
FIG. 3 illustrates a block diagram of a device for loading user identification card information according to an embodiment of the present disclosure.
FIG. 4 illustrates a block diagram of an electronic device according to another embodiment of the present disclosure.

### DETAILED DESCRIPTION OF THE PRESENT DISCLOSURE

The embodiments of the present disclosure will be described clearly and completely below with reference to the accompanying drawings. It is apparent that the described embodiments are only a part of the embodiments of the present disclosure, and not all of the embodiments. Based on the embodiments of the present disclosure, all other embodiments obtained by those skilled in the art without creative efforts shall fall within the scope of protection of the present disclosure.

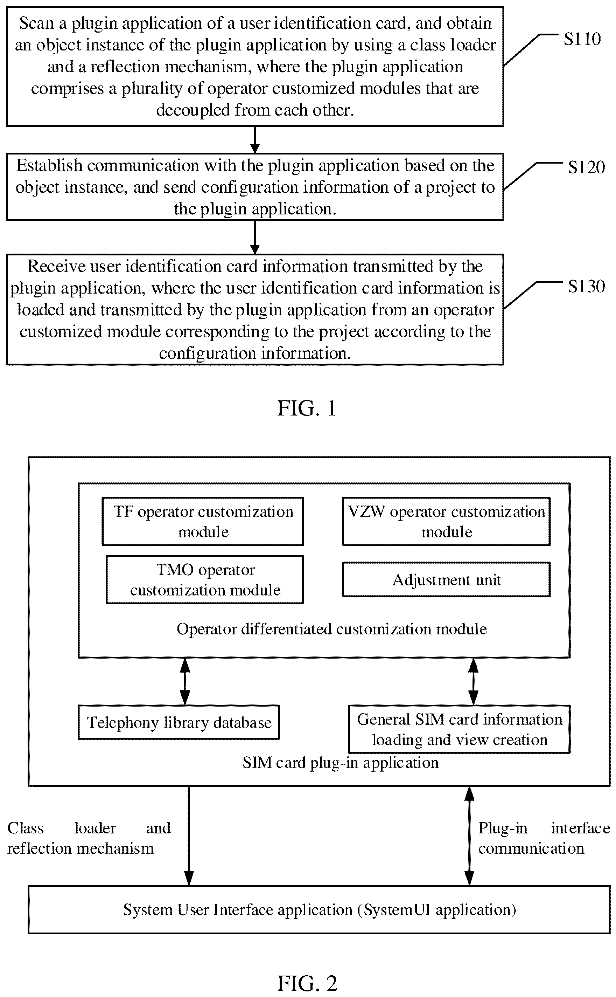

FIG. 1 illustrates a flowchart of a method for loading user identification card information according to an embodiment of the present disclosure. The execution subject of the method for loading user identification card information may be any device having the capability to display user identification card information, such as a mobile phone, television, computer, smartwatch, or household appliance. The device serving as the execution subject may install both a system user interface application and a plug-in application of the user identification card.

As shown in FIG. 1, the system user interface application may execute the method for loading user identification card information. The method for loading user identification card information may include steps S110 to S130.

At Step S110, scan a plug-in application of a user identification card, and obtaining an object instance of the plug-in application by using a class loader and a reflection mechanism, where the plug-in application comprises a plurality of operator customization modules that are decoupled from each other. At Step S120, establish communication with the plug-in application based on the object instance and send project configuration information to the plug-in application. At Step S130, receive user identification card information transmitted by the plug-in application, where the user identification card information is loaded and transmitted by the plug-in application from the operator customization module corresponding to the project according to the configuration information.

The plug-in application of the user identification card is a plug-in application constructed to separate SIM card functional modules from the system user interface application (SystemUI application). Referring to FIG. 2, the plug-in application comprises a plurality of operator customization modules, which are decoupled from each other. The plurality of operator customization modules, for example, may correspond to the operator differentiation customization modules shown in FIG. 2. Each operator customization module may be designed according to the requirements of a respective operator. The codes of the operator customization modules are decoupled and independent of each other, thereby facilitating function customization and operator-specific extensions.

The plug-in application may further include a general design portion that implements SIM card functions and related common functions. The general design portion may include, as shown in FIG. 2, a Telephony library and a general SIM card information loading and view creation module.

The system user interface application (SystemUI application) may scan the plug-in application of a user identification card by using a scanning service (such as PackageManagerService), and obtain an object instance of the plug-in application by using a class loader (ClassLoader) and a reflection mechanism.

The system user interface application (SystemUI application) may establish communication with the plug-in application based on the object instance, and, through plug-in interface communication, send project configuration information to the plug-in application. The plug-in application identifies operator information corresponding to the project according to the configuration information, and may further load user identification card information (SIM card information) from an operator customization module corresponding to the operator information of the project, and transmit the information to the system user interface application (SystemUI application).

In this manner, based on steps S110 to S130, the SIM card functional modules are separated from the system user interface application (SystemUI application) by means of the plug-in application of the user identification card, thereby avoiding various problems caused by coupling the SIM card functional modules into the SystemUI application. The independent implementation of the SIM card plug-in application shares the ROM occupation of SIM card-related customization resources, avoiding the problem that the ROM of the SystemUI becomes excessively large due to oversized operator customization resources. Furthermore, the plug-in application implements multiple operator customization modules that are decoupled from each other, thereby realizing functional modularization, facilitating version iteration development with a reduced workload, and providing high reusability, scalability, and customizability. Operator customizations are isolated, and separate customization enables dynamic loading of user identification card information customized for different operators. Accordingly, the overall loading performance of user identification card information can be effectively improved.

The following describes further optional specific embodiments of the steps performed when loading user identification card information under the embodiment of FIG. 1.

In one embodiment, prior to scanning the plug-in application of the user identification card, the method further comprises: monitoring system broadcasts to obtain a monitored system broadcast; and detecting a scanning action from the system broadcast, where the scanning action is used to trigger scanning of the plug-in application.

In this manner, before the system user interface application scans the plug-in application of the user identification card, the system user interface application (SystemUI application) monitors the system broadcasts. When a scanning action is detected in the system broadcast, the plug-in application is scanned.

In one embodiment, prior to scanning the plug-in application of the user identification card, the method further comprises: monitoring a user operation to obtain the monitored user operation; and detecting a scanning action according to the user operation, where the scanning action is used to trigger scanning of the plug-in application.

In this manner, before the system user interface application scans the plug-in application of the user identification card, the system user interface application (SystemUI application) monitors user operations. If a scanning action triggered by a user operation is detected, the plug-in application is scanned.

In one embodiment, after receiving the user identification card information transmitted by the plug-in application, the method further comprises: determining a display policy for the user identification card information; and performing a display operation on the user identification card information according to the display policy.

Determining the display policy of the user identification card information may include determining a display policy of the user identification card information corresponding to a currently selected operator. The display policy may include a display position, display manner, and the like. The display operation of the user identification card information according to the display policy may include, for example, placing a SIM card icon in a status bar, placing the operator name in a notification panel, and further controlling the visibility of various views by means of plug-in interfaces.

In one embodiment, after receiving the user identification card information transmitted by the plug-in application, the method further comprises: performing a display operation on the user identification card information according to a predetermined unified display policy. For example, according to the predetermined unified display policy, placing the SIM card icon in the status bar, placing the operator name in the notification panel, and further controlling the visibility of various views by means of plug-in interfaces.

In one embodiment, prior to scanning the plug-in application of the user identification card, the method further comprises: detecting whether the plug-in application is locally installed to obtain a detection result; and determining whether to scan the plug-in application according to the detection result.

Before scanning the plug-in application of the user identification card, the system user interface application (SystemUI application) detects whether the plug-in application is locally installed to obtain a detection result. Whether to scan the plug-in application is then determined according to the detection result. Specifically, if the detection result indicates that the plug-in application is installed, the plug-in application is scanned; if the detection result indicates that the plug-in application is not installed, the plug-in application is not scanned.

In one embodiment, prior to receiving the user identification card information transmitted by the plug-in application, the method further comprises: acquiring processing information of the user identification card information; and sending the processing information to the plug-in application, where the processing information is used by the plug-in application to perform preprocessing on the user identification card information.

In this embodiment, the system user interface application (SystemUI application) sends processing information to the plug-in application in advance. After the plug-in application performs preprocessing on the user identification card information, the processed information is transmitted to the system user interface application (SystemUI application). Acquiring the processing information of the user identification card information may include acquiring processing information generated by a user-defined operation, or acquiring predetermined processing information. The processing information may include adjustment information relating to shape, size, and content. The plug-in application performs preprocessing such as adjusting the shape, size, and content of the user identification card information.

In one embodiment, prior to receiving the user identification card information transmitted by the plug-in application, the processing information is not sent to the plug-in application, and the system user interface application (SystemUI application) receives the original user identification card information.

In one embodiment, after establishing communication with the plug-in application based on the object instance, the method further comprises: sending verification information to the plug-in application, where the verification information is used by the plug-in application to perform verification processing on the user identification card information.

The verification information may be description information of the user identification card information required locally. Based on the verification information, the plug-in application may perform verification processing on the user identification card information to determine whether the user identification card information obtained from the operator customization module meets the local requirements. If the requirements are met, the user identification card information may be sent to the system user interface application. If the requirements are not met, information indicating non-compliance may be sent to the system user interface application.

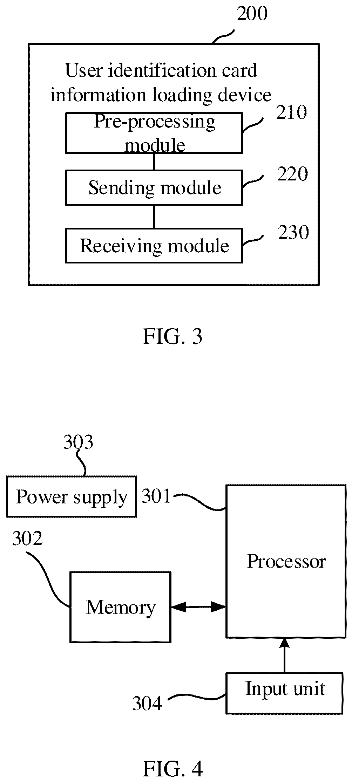

For the purpose of better implementing the method for loading user identification card information provided by the embodiments of the present disclosure, the embodiments of the present disclosure further provide a device for loading user identification card information based on the above method. The meanings of the terms are the same as those in the above method for loading user identification card information, and specific implementation details may be referenced from the description of the method embodiments. FIG. 3 illustrates a block diagram of a user identification card information loading device according to an embodiment of the present disclosure.

As shown in FIG. 3, a user identification card information loading device 200 is applied to a system user interface application. The user identification card information loading device 200 may comprise a pre-processing module 210, a sending module 220, and a receiving module 230. The pre-processing module 210 is configured to scan a plug-in application of a user identification card and obtain an object instance of the plug-in application by using a class loader and a reflection mechanism, where the plug-in application comprises a plurality of operator customization modules that are decoupled from each other. The sending module 220 is configured to establish communication with the plug-in application based on the object instance, and to send project configuration information to the plug-in application. The receiving module 230 is configured to receive user identification card information transmitted by the plug-in application, where the user identification card information is loaded and transmitted by the plug-in application from the operator customization module corresponding to the project according to the configuration information.

In some embodiments of the present disclosure, prior to scanning the plug-in application of the user identification card, the device further comprises a broadcast triggering module configured to: monitor system broadcasts to obtain monitored system broadcasts; and detect a scanning action according to the system broadcasts, where the scanning action is used to trigger scanning of the plug-in application.

In some embodiments of the present disclosure, after receiving the user identification card information transmitted by the plug-in application, the device further comprises a display module configured to: determine a display policy of the user identification card information; and perform a display operation on the user identification card information according to the display policy.

In some embodiments of the present disclosure, prior to scanning the plug-in application of the user identification card, the device further comprises a detection module configured to: detect whether the plug-in application is locally installed to obtain a detection result; and determine whether to scan the plug-in application according to the detection result.

In some embodiments of the present disclosure, prior to receiving the user identification card information transmitted by the plug-in application, the device further comprises a request module configured to: acquire processing information of the user identification card information; and send the processing information to the plug-in application, where the processing information is used by the plug-in application to perform preprocessing on the user identification card information.

In some embodiments of the present disclosure, prior to scanning the plug-in application of the user identification card, the device further comprises an operation triggering module configured to: monitor user operations to obtain monitored user operations; and detect a scanning action according to the user operations, where the scanning action is used to trigger scanning of the plug-in application.

In some embodiments of the present disclosure, after establishing communication with the plug-in application based on the object instance, the device further comprises a verification module, configured to: send verification information to the plug-in application, where the verification information is used by the plug-in application to perform verification processing on the user identification card information.

It should be noted that although several modules or units of the device for performing actions have been mentioned in the above detailed description, such division is not mandatory. In fact, according to the embodiments of the present disclosure, the features and functions of two or more modules or units described above may be embodied in one module or unit. Conversely, the features and functions of one module or unit described above may be further divided and embodied by a plurality of modules or units.

In addition, the embodiments of the present disclosure further provide an electronic device, which may be a terminal or a server. FIG. 4 illustrates a schematic structural diagram of an electronic device involved in the embodiments of the present disclosure. Specifically, the electronic device may include: a processor 301 with one or more processing cores, a memory 302 comprising one or more computer-readable storage media, a power supply 303, and an input unit 304, among other components.

Those skilled in the art will understand that the structure of the electronic device shown in FIG. 4 does not constitute a limitation on the electronic device. The electronic device may include more or fewer components than illustrated, or combine certain components, or adopt different component arrangements.

The processor 301 serves as the control center of the electronic device. It connects various parts of the device through various interfaces and lines, and, by running or executing software programs and/or modules stored in the memory 302, as well as calling data stored in the memory 302, performs various functions of the device and processes data, thereby providing overall control of the electronic device.

Optionally, the processor 301 may comprise one or more processing cores. Preferably, the processor 301 may integrate an application processor and a modem processor, where the application processor mainly processes the operating system, user interfaces, and application programs, while the modem processor mainly processes wireless communication. It is understood that the modem processor may alternatively not be integrated into the processor 301.

The memory 302 may be used to store software programs and modules, and the processor 301 executes various functional applications and data processing by running the software programs and modules stored in the memory 302. The memory 302 may mainly include a program storage area and a data storage area, where the program storage area may store an operating system and at least one application program required for a function (such as an audio playback function, an image playback function, and the like); and the data storage area may store data created according to the use of the electronic device. In addition, the memory 302 may include high-speed random access memory, as well as non-volatile memory, such as at least one disk storage device, flash memory device, or other non-volatile solid-state storage devices. Accordingly, the memory 302 may further comprise a memory controller configured to provide access of the processor 301 to the memory 302.

The electronic device further comprises a power supply 303 configured to supply power to the various components. Preferably, the power supply 303 may be logically connected to the processor 301 through a power management system, thereby enabling the power management system to perform functions such as managing charging, discharging, and power consumption management. The power supply 303 may further include one or more direct-current or alternating-current power sources, rechargeable systems, power failure detection circuits, power converters or inverters, power status indicators, and the like.

The electronic device may further comprise an input unit 304 configured to receive digital or character information, and to generate input signals related to user settings and function control, such as signals from a keyboard, mouse, joystick, optical input device, or trackball.

Although not shown, the electronic device may further comprise a display unit and the like, which will not be described in detail herein. Specifically, in the present embodiment, the processor 301 of the electronic device executes instructions to load executable files corresponding to one or more processes of computer programs into the memory 302, and to run the computer programs stored in the memory 302, thereby implementing various functions described in the foregoing embodiments of the present disclosure. For example, the processor 301 may execute the following steps:
scanning a plug-in application of a user identification card, and obtaining an object instance of the plug-in application by using a class loader and a reflection mechanism, where the plug-in application comprises a plurality of operator customization modules that are decoupled from each other; establishing communication with the plug-in application based on the object instance, and sending project configuration information to the plug-in application; and receiving user identification card information transmitted by the plug-in application, where the user identification card information is loaded and transmitted by the plug-in application from the operator customization module corresponding to the project according to the configuration information.

It will be understood by those of ordinary skill in the art that all or part of the steps of the various methods of the above embodiments may be implemented by a computer program, or by relevant hardware controlled through a computer program. The computer program may be stored in a computer-readable storage medium and loaded and executed by a processor.

Accordingly, the embodiments of the present disclosure further provide a storage medium, in which a computer program is stored, where the computer program can be loaded by a processor to perform the steps of any of the methods provided by the embodiments of the present disclosure.

The storage medium may comprise: a Read Only Memory (ROM), a Random Access Memory (RAM), a disk, an optical disc, or the like.

Since the computer program stored in the storage medium may execute the steps of any of the methods provided by the embodiments of the present disclosure, the advantageous effects achievable by the methods provided by the embodiments of the present disclosure may also be realized. For details, reference is made to the foregoing embodiments, which will not be repeated herein.

Those skilled in the art, upon consideration of the specification and practice of the embodiments disclosed herein, will readily conceive of other embodiments of the present disclosure. The present disclosure is intended to cover any modifications, uses, or adaptive changes that follow the general principles of the present disclosure and include well-known knowledge or conventional technical means in the art not disclosed herein.

It should be understood that the present disclosure is not limited to the embodiments described above and illustrated in the accompanying drawings, but may be subject to various modifications and alterations without departing from the scope thereof.

## Claims

1. A method of loading user identification card information, applied to a system user interface application, **characterized in that** the method comprises:
scanning a plugin application of a user identification card, and obtaining an object instance of the plugin application by using a class loader and a reflection mechanism, wherein the plugin application comprises a plurality of operator customized modules that are decoupled from each other;
establishing communication with the plugin application based on the object instance, and sending configuration information of a project to the plugin application; and
receiving user identification card information transmitted by the plugin application, wherein the user identification card information is loaded and transmitted by the plugin application from an operator customized module corresponding to the project according to the configuration information.

2. The method according to claim 1, wherein before scanning the plugin application of the user identification card, the method further comprises:
monitoring a system broadcast to obtain a system broadcast; and
detecting a scanning action to trigger scanning of the plugin application according to the system broadcast.

3. The method according to claim 1, wherein after receiving the user identification card information transmitted by the plugin application, the method further comprises:
determining a display policy of the user identification card information; performing a display operation on the user identification card information according to the display policy.

4. The method according to claim 1, wherein before scanning the plugin application of the user identification card, the method further comprises:
detecting whether the plugin application is installed locally to obtain a detection result; and
determining whether to scan the plugin application according to the detection result.

5. The method according to claim 1, wherein before receiving the user identification card information transmitted by the plugin application, the method further comprises:
acquiring processing information of the user identification card information; and
sending the processing information to the plugin application, wherein the processing information is used by the plugin application to perform preprocessing on the user identification card information.

6. The method according to claim 1, wherein before scanning the plugin application of the user identification card, the method further comprises:
monitoring a user operation to obtain a monitored user operation; and
detecting a scanning action according to the user operation, wherein the scanning action is used to trigger scanning of the plugin application.

7. The method according to claim 1, wherein after establishing communication with the plugin application based on the object instance, the method further comprises:
sending verification information to the plugin application, wherein the verification information is used by the plugin application to perform verification processing on the user identification card information.

8. The method according to claim 1, wherein after receiving the user identification card information transmitted by the plugin application, the method further comprises:
performing a display operation on the user identification card information according to a predetermined unified display policy.

9. The method according to claim 5, wherein the receiving the user identification card information transmitted by the plugin application comprises:
receiving the user identification card information obtained after the plugin application performs preprocessing according to the processing information.

10. The method according to claim 9, wherein the processing information comprises adjustment information of shape, size, and content.

11. The method according to claim 7, wherein the verification information is description information of the user identification card information required locally.

12. A user identification card information loading device, applied to a system user interface application, the user identification card information loading device comprising:
a preprocessing module, configured to scan a plug-in application for a user identification card, and obtain an object instance of the plug-in application using a class loader and reflection mechanism, wherein the plug-in application comprises a plurality of operator customization modules that are decoupled from each other;
a transmission module, configured to establish communication with the plug-in application based on the object instance, and transmit configuration information of a project to the plug-in application; and
a reception module, configured to receive the user identification card information transmitted by the plug-in application, wherein the user identification card information is loaded and transmitted by the plug-in application from the operator customization module corresponding to the project based on the configuration information.

13. The device according to claim 12, further comprising a broadcast trigger module configured to, prior to scanning the plug-in application for the user identification card, monitor system broadcasts to obtain a received system broadcast, and detect a scanning action based on the system broadcast, wherein the scanning action is used to trigger the scanning of the plug-in application.

14. The device according to claim 12, further comprising a display module configured to, after receiving the user identification card information transmitted by the plug-in application, determine a display strategy for the user identification card information, and perform a display operation on the user identification card information according to the display strategy.

15. The device according to claim 12, further comprising a detection module configured to, prior to scanning the plug-in application for the user identification card, detect whether the plug-in application is locally installed, to obtain a detection result, and determine whether to perform scanning on the plug-in application based on the detection result.

16. The device according to claim 12, further comprising a request module configured to, prior to receiving the user identification card information transmitted by the plug-in application, obtain processing information of the user identification card information, and transmit the processing information to the plug-in application, wherein the processing information is used for the plug-in application to perform preprocessing on the user identification card information.

17. The device according to claim 12, further comprising an operation trigger module configured to, prior to scanning the plug-in application for the user identification card, monitor user operations to obtain a detected user operation, and detect a scanning action based on the user operation, wherein the scanning action is used to trigger the scanning of the plug-in application.

18. The device according to claim 12, further comprising a verification module configured to transmit verification information to the plug-in application after establishing communication with the plug-in application based on the object instance, wherein the verification information is used by the plug-in application to perform verification processing on the user identification card information.

19. A storage medium storing computer program executable by a processor of a computer to perform the method according to any one of claims 1 to 11.

20. An electronic device, comprising: a memory storing computer program, and a processor executing the computer program to perform the method according to any one of claims 1 to 11.
